(19) Europäisches Patentamt
European Patent Office
Office européen des brevets

(11) Veröffentlichungsnummer: **0 078 958**
**B1**

(12) # EUROPÄISCHE PATENTSCHRIFT

(45) Veröffentlichungstag der Patentschrift: **07.01.87**

(51) Int. Cl.⁴: **C 08 G 18/61**, C 08 G 18/38, C 08 G 18/40, B 29 C 49/00, B 29 C 47/02

(21) Anmeldenummer: **82109797.9**

(22) Anmeldetag: **23.10.82**

(54) **Verfahren zur Herstellung von dünnwandigen Gegenständen aus thermoplastischen Polyurethanen oder Polyurethanharnstoffen durch Extrusion.**

(30) Priorität: **05.11.81 DE 3143994**

(43) Veröffentlichungstag der Anmeldung: **18.05.83 Patentblatt 83/20**

(45) Bekanntmachung des Hinweises auf die Patenterteilung: **07.01.87 Patentblatt 87/2**

(84) Benannte Vertragsstaaten: **BE DE FR GB IT NL**

(56) Entgegenhaltungen:
**EP - A - 0 004 937**
**EP - A - 0 004 939**
**DE - A - 1 964 834**
**DE - A - 3 012 126**
**DE - B - 1 114 632**
**FR - A - 2 311 793**

(73) Patentinhaber: **BAYER AG, Konzernverwaltung RP Patentabteilung, D-5090 Leverkusen 1 Bayerwerk (DE)**

(72) Erfinder: **Quiring, Bernd, Dr., Albrecht-Haushofer-Strasse 2, D-5090 Leverkusen 1 (DE)**
Erfinder: **Goyert, Wilhelm, Dr., Haberstrasse 48, D-5090 Leverkusen 1 (DE)**
Erfinder: **Wagner, Hans, Dr., Tizianstrasse 13, D-4047 Dormagen 1 (DE)**
Erfinder: **Heidingsfeld, Herbert, Von Hasenwinkelweg 8, D-5020 Frechen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein Verfahren zur Herstellung von dünnwandigen Gegenständen aus thermoplastischen Polyurethanen und Polyurethanharnstoffen mit im frischen Zustand nicht oder wenig blockender Oberfläche durch Extrusion und vorzugsweise durch Blasverformung, gekennzeichnet durch gleichzeitigen Einbau von funktionellen Silikonderivaten und Zusatz von äusseren Trennmitteln oder Trennmittelgemischen.

Die Verarbeitung von thermoplastischen Polyurethanen durch Extrusion ist heute Stand der Technik. Die für diese Verwendung eingesetzten, in der Regel verhältnismässig niedrig schmelzenden PUR-Thermoplasten haben beim Abkühlen aus der Schmelze, besonders wenn sie nicht über längere Zeit intensiv gekühlt werden konnten, noch lange eine gewisse Oberflächenklebrigkeit, so dass z.B. frisch hergestellte, aufgewickelte dünne Folien dazu neigen, auf der Rolle zu verkleben. Besonders gravierend ist dieses Problem bei nach üblichen Verfahren hergestellten Blasfolien, bei deren Herstellung die Schmelze mit Luft abgekühlt wird.

Zur Verringerung dieser Blockneigung (Oberflächenklebrigkeit) kann man den Polyurethanthermoplasten inerte Trennmittel zusetzen. Derartige Trennmittel, die dem Stand der Technik entsprechen, sind z.B. Derivate langkettiger Fettsäuren und Sulfonsäuren, Öle, Silikonöl, natürliche Wachse usw.. Sie wirken selbstverständlich nur an der Produktoberfläche trennend, an die sie infolge ihrer Unverträglichkeit mit dem Polyurethan mehr oder weniger schnell wandern. Die Trennwirkung wird in der Regel mit dem Trennmittelgehalt erhöht, wobei höhere Konzentrationen zu einer Verringerung der physikalischen Festigkeit und zu einem unerwünschten, abwischbaren, bei längerer Lagerung immer stärker werdenden oder wiederkehrenden grauen Schleier an der Produktoberfläche führen können. In vor der Weiterverarbeitung lange gelagertem Polyurethan (polyharnstoff-)granulat kann die Trennmittelkonzentration an der Oberfläche so gross werden, dass das Produkt von einem Extruder nicht gleichmässig eingezogen wird (Überschmierung). Ausserdem ist immer gerade dann, wenn eine optimale Trennwirkung erwünscht ist, nämlich im frisch hergestellten Teil, die Trennmittelkonzentration an der Oberfläche am geringsten. So ist die Wirkung eines grossen Anteils der zugesetzten Trennmittel nur die unerwünschte optische Oberflächenerscheinung.

Es wurde nunmehr überraschend gefunden, dass gerade an den Oberflächen dünnwandiger Teile, also z.B. von Blasfolien, eine optimale Trennwirkung erzielt wird, wenn man ein Silikon mit zerewitinoffaktiven Gruppen in das thermoplastische Polyurethan oder den thermoplastischen Polyurethanharnstoff einbaut und dieses mit einem kleineren Anteil mindestens eines unter normalen Reaktionsbedingungen inerten Trennmittels kombiniert. Mit dieser erfindungswesentlichen Massnahme ist überraschenderweise auch eine ganz wesentliche Erhöhung der Verarbeitungssicherheit verbunden. Einerseits wird durch die erfindungsgemässe Massnahme der Temperaturbereich, innerhalb dessen eine einwandfreie Verarbeitung der Thermoplasten möglich ist, beträchtlich erweitert, wie aus den nachstehenden Beispielen und Vergleichsbeispielen ersichtlich ist, und andererseits ist die Verarbeitbarkeit der Thermoplaste auch dann noch gegeben, wenn bei der Herstellung der Polyurethane das ideale Äquivalentverhältnis von Isocyanatgruppen zu Hydroxylgruppen von 1:1 nicht genau eingehalten wird. So lässt sich das in den nachstehenden Beispielen beschriebene Polyurethan V, welches kein Polysiloxan mit gegenüber Isocyanatgruppen reaktionsfähigen Gruppen enthält, nur unter der Voraussetzung verarbeiten, dass das Äquivalentverhältnis bei exakt 1:1 liegt. Bereits geringe Abweichungen führen zu einem Polyurethan, das sich nicht mehr zu einer brauchbaren Blasfolie extrudieren lässt. Das in Beispiel 1 A) beschriebene erfindungsgemäss modifizierte Polyurethan lässt sich auch bei geringfügigen Abweichungen von diesem Äquivalentverhältnis von 1:1 noch einwandfrei innerhalb des breiten Temperaturbereichs von 165 bis 210 °C (jeweils höchste Werte des am Extruder eingestellten Temperaturprofils) verarbeiten.

Der Einbau von mit Isocyanat reagierenden Siliciumverbindungen in Polyurethane ist ebenso wie die Verwendung von gegenüber Isocyanatgruppen inerten Trennmitteln bereits bekannt. So beschreibt beispielsweise die DE-PS 1 114 632 den Einbau von mit Isocyanat reagierenden Siliciumverbindungen in Polyurethane zur Verbesserung der Hydrolysenbeständigkeit. Die so modifizierten Produkte finden u.a. Verwendung für Beschichtungen und Klebefolien, wo naturgemäss eine gute Haftung notwendig ist. Das für die Herstellung von Blasfolien wesentliche gute Trennverhalten kann deshalb von den nach der Lehre gemäss dieser Patentschrift erhaltenen Produkten nicht erwartet werden. Die EP-A 0 004 939 beschreibt die Verwendung von thermoplastischen Polyurethanen zur Verarbeitung in Extrudern und/oder auf Kalandern und erwähnt unter anderen gegebenenfalls mitzuverwendenden Hilfs- und Zusatzmitteln auch «Gleitmittel», ohne indessen irgendwelche konkreten Empfehlungen bezüglich der Natur dieser «Gleitmittel» auszusprechen. Die erfindungswesentliche Kombination ganz bestimmter, chemisch inerter Trennmittel und die hiermit erzielbaren, oben skizzierten Vorteile werden in dieser Vorveröffentlichung auch nicht andeutungsweise angesprochen. Die DE-OS 1 964 834 befasst sich mit der Herstellung von Polyurethanen in Reaktionsschnecken, wobei diese Herstellung in Gegenwart von Gleitmitteln, die ein Kleben des Reaktionsgemisches an den Schnecken und Wandungen des Extruders vermindern, durchgeführt wird. Als Gleitmittel werden insbesondere gegenüber Isocyanatgruppen weitgehend inerte Substanzen empfohlen. Ganz abgesehen davon, dass es beim erfindungsgemässen Verfahren nicht um die Herstellung von thermoplastischen Polyurethanen in Extrudern sondern vielmehr um die Verarbeitung von vorab hergestellten thermoplastischen Polyurethanen geht, kann gesagt werden, dass diese Vorveröffentlichung auch nicht den geringsten Hinweis enthält, dass nur Kombinationen der dort genannten, gegenüber Isocyanatgruppen inerten Gleitmittel mit in das Polyurethan eingebauten Polysiloxanen zum gewünschten Erfolg führen. Die DE-OS 3 012 126 ihrerseits beschreibt ganz spezielle, gegenüber Isocyanatgruppen reaktionsfähige Polysiloxane als Formtrennmittel für Kunststoffe auf Polyisocyanatbasis und ein Verfahren zur Herstellung von Formkunststoffen mit selbsttrennenden Eigenschaften. Die in dieser Vorveröffentlichung empfohlenen Polysiloxane mit gegenüber Isocyanatgruppen reaktionsfähigen Gruppen sind mit der nachstehend näher beschriebenen erfindungsgemässen Komponente D) nicht identisch, da sie Modifizierungsprodukte von gegenüber Isocyanatgruppen reaktionsfähigen Polysiloxanen der Art der erfindungsgemässen Komponente D) darstellen. Im übrigen ging es den Autoren dieser Veröffentlichung ebenfalls um eine Verbesserung der bekannten Verfahren zur Herstellung von Kunststoffen mit selbsttrennenden Eigenschaften und nicht um die Verarbeitung von anderweitig hergestellten Kunststoffen in Extrudern. Die erfindungsgemäss aufgefundene zwingende Notwendigkeit, gegenüber Isocyanatgruppen reaktionsfähige Gruppen aufweisende Polysiloxane einer anderen Konstitution mit gegenüber Isocyanatgruppen inerten Trennmitteln zu kombinieren, um bei der Herstellung von Blasfolien die obengenannten technisch vorteilhaften Effekte zu erzielen, wird in dieser Veröffentlichung auch nicht andeutungsweise erwähnt.

Gegenstand der Erfindung ist ein Verfahren zur Herstellung von dünnwandigen Gegenständen aus thermoplastischen Polyurethanen und Polyurethanharnstoffen durch Extrusion oder Blasverformung, dadurch gekennzeichnet, dass das thermoplastische Polyurethan bzw. der thermoplastische Polyurethanpolyharnstoff aufgebaut ist aus

A) mindestens einer langkettigen, im wesentlichen 2 Hydroxylgruppen enthaltenden Verbindung mit Molekulargewichten zwischen 400 und 10 000, bevorzugt zwischen 450 und 6000, die gegebenenfalls eine höhermolekulare Verbindung mit mehr als 2 Hydroxylgruppen, deren Durchschnittsmolekulargewicht ebenfalls im angegebenen Bereich liegt, anteilig bis zu 40 Gew.-%, bevorzugt bis 20%, enthalten kann,

B) einem oder mehreren aliphatischen, cycloaliphatischen, aromatischen oder araliphatischen Diisocyanaten,

C) mindestens einem mit Isocyanatgruppen reagierenden, im wesentlichen difunktionellen Kettenverlängerer mit einem Molekulargewicht von 60–300 und gegebenenfalls Wasser, bevorzugt einer Mischung aus mindestens 2 Kettenverlängerern,

D) 0,1–15 Gew.-%, bezogen auf das Gesamtprodukt einer mit Isocyanatgruppen reagierenden Siliciumverbindung der allgemeinen Formel

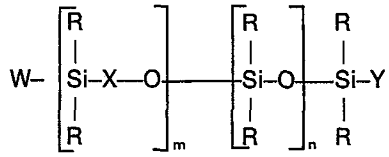

wobei W und Y gleich oder verschieden sind und OH, COOH, $NH_2$, NHZ, SH, R'OH, R'COOH, $R'NH_2$, R'NHZ, R'SH, R'NZZ,

X einen zweiwertigen organischen, gegebenenfalls Heteroatome enthaltenden Rest mit bis zu 6000 Molekulargewichtseinheiten, bevorzugt Alkylen,

Z einen gegebenenfalls OH, COOH, $NH_2$, NH-Alkyl, SH substituierten Alkyl-, Cycloalkyl-, Aryl- oder Aralkylrest,

R einen Alkyl-, Cycloalkyl-, Aryl- und/oder Alkoxyrest mit 1–6 C-Atomen, (vorzugsweise Methyl),

R' einen gegebenenfalls durch Ether-, Ester-, Thioether-, Aminogruppen unterbrochenen Alkylenrest mit bis 6000 Molekulargewichtseinheiten, der gegebenenfalls über Heteroatome wie z.B. Sauerstoff oder Schwefel mit dem Silicium verknüpft sein kann, sowie Cycloalkylenrest bedeuten,

m und n ganze Zahlen sind, wobei m oder n = 0 sein können,

E) 0,05–5% mindestens eines normalerweise als gegenüber Isocyanat- und Hydroxylgruppen inert anzusehenden Trennmittels,

wobei das molare Verhältnis der NCO zu mit diesen reagierenden Gruppen der Komponenten A, C und D zwischen 0,85:1 und 1,2:1, bevorzugt zwischen 0,93:1 und 1,1:1 und das molare Verhältnis von C zu A zwischen 0,2:1 und 30:1 liegt.

Als im wesentlichen lineare Polyole mit Molekulargewichten zwischen 400 und 10 000, bevorzugt zwischen 450 und 6000, kommen die aus der Polyurethanchemie an sich bekannten, vorzugsweise 2, anteilig gegebenenfalls auch mehr aktive Wasserstoffatome (im wesentlichen Hydroxylendgruppen) enthaltenden Polyester, Polylactone, Polyether, Polythioether, Polyesteramide, Polycarbonate, Polyacetale, Vinylpolymere wie z.B. Polybutadienöle, bereits Urethan- oder Harnstoffgruppen enthaltende Polyhydroxylverbindungen sowie gegebenenfalls modifizierte natürliche Polyole, bzw. auch andere zerewitinoffaktive Gruppen wie Amino-, Carboxyl- oder Thiolgruppen enthaltenden Verbindungen in Betracht. Diese Verbindungen entsprechen dem Stand der Technik und sind z.B. in den DE-A 2 302 564, 2 423 764 und 2 549 372 (US-PS 3 963 679), 2 402 799, 2 431 846, 2 402 840 (US-PS 3 984 607) sowie der DE-B 2 457 387 (US-PS 4 035 213) beschrieben. Erfindungsgemäss bevorzugt sind hydroxylgruppenhaltige Polyester aus Glykolen und Adipinsäure, Phthal- und/oder Terephthalsäure, sowie deren Hydrierungsprodukten, Hydroxylpolycarbonate, Polycaprolactone, auf Glykolen, Aminen und/oder Wasser gestartetes Polyethylenoxid und Polypropylenoxid, Polytetrahydrofuran und Mischpolyether sowie Mischungen aus derartigen Verbindungen.

Erfindungsgemäss besonders bevorzugt sind Mischungen der genannten langkettigen Diole mit

bis zu 20 Gew.-%, bevorzugt 3–10 Gew.-%, (bezogen auf Komponente A) einer im Mittel etwa 3 zerewitinoffaktive (bevorzugt Hydroxyl-)Gruppen enthaltenden höhermolekularen, ähnlich aufgebauten Verbindung. Die höhere Funktionalität wird durch anteilige Mitverwendung von z.B. trifunktionellen Verbindungen wie Trimellithsäure, Glycerin, Trimethylolpropan, Triethanolamin usw. bei der Herstellung der höhermolekularen Hydroxylgruppen enthaltenden Verbindung erzielt.

Zur Herstellung der erfindungsgemäss zu verwendenden Polyurethane und Polyurethanharnstoffe können alle aromatischen, araliphatischen und cycloaliphatischen Diisocyanate verwendet werden, wie sie dem Stand der Technik entsprechen und z.B. in den oben genannten Druckschriften beschrieben sind. Wichtigste Beispiele sind Diphenylmethan-4,4′-diisocyanat, die Toluylendiisocyanate, Hexamethylendiisocyanat, Isophorondiisocyanat und Dicyclohexylmethan-4,4′-diisocyanat.

Als Kettenverlängerer der Gruppe C kommen praktisch alle Verbindungen in Frage, die im Mittel etwa 2 zerewitinoffaktive Gruppen und ein Molekulargewicht zwischen 60 und 300 haben, sowie Wasser. Das sind z.B. Glykole, Diamine, Aminoalkohole, Merkaptoalkohole usw. Beispielhaft seien genannt: Ethylenglykol, Di- und Triethylenglykol, Propandiol-(1,2) und -(1,3), Di-, Tri-, Tetrapropy lenglykol, Butandiol-(1,3), -(2,3) und -(1,4), Pentan diol-(1,5), Dimethylpropandiol-(1,3), Hexandiol (1,6), Trimethylhexandiol-(1,6), 1,4-Bishydroxyme thylcyclohexan, Hydrochinondihydroxyethylether Ethylendiamin, Hexamethylendiamin, Isophoron diamin (1-Aminomethyl-3-amino-1,5,5-trimethyl cyclohexan), gegebenenfalls substituierte Diami nodiphenylmethane, Diaminotoluole, Dimethylol propionsäure, Aminoethanol, Mercaptoethano usw.

Anteilig können auch drei- und höherfunktionel le Kettenverlängerer wie Glycerin, Trimethylol propan usw. eingesetzt werden sowie gegenübe Isocyanat monofunktionelle Verbindungen, sog Kettenabbrecher wie n-Octanol, Dibutylamin usw

Bevorzugt enthalten die erfindungsgemäss zu verwendenden Thermoplasten Mischungen aus mindestens 2 Kettenverlängerern der Gruppe C im Gewichtsverhältnis 99:1 bis 50:50, besonders bevorzugt im Gewichtsverhältnis 98:2 bis 60:40 speziell bevorzugt 97:3 bis 85:15. Besonders bevorzugt sind Mischungen aus Butandiol oder Hexandiol mit einem anderen Glykol und/oder einem aliphatischen oder cycloaliphatischen Diamin.

Beispielhaft für mit Isocyanat reagierende Siliciumverbindungen der Gruppe D seien genannt:

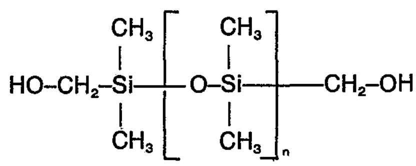

n = 1 – 100

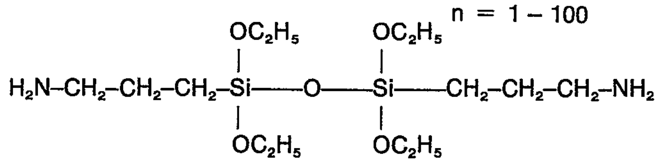

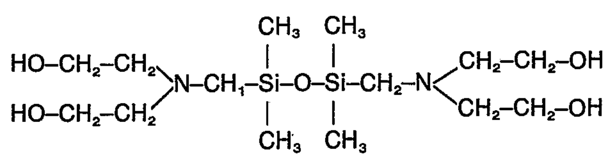

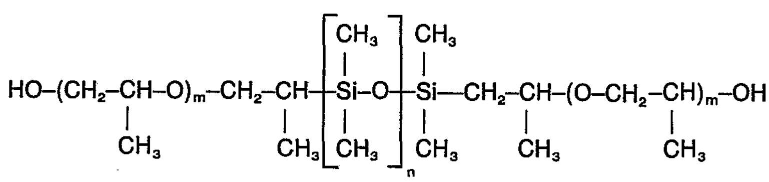

m = 0–200, n = 1–100

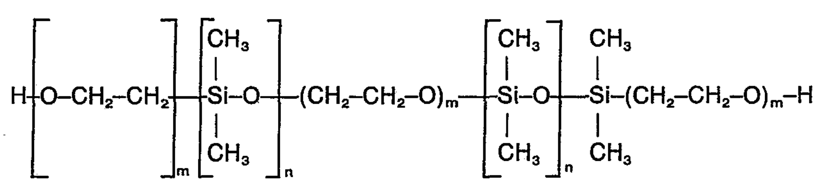

m, n = 1 – 100

Das Verhältnis der Funktionalitäten der Reaktionspartner bei der Herstellung der erfindungsgemäss zu verwendenden Produkte ist so zu wählen, dass die entsprechenden Polyurethane und Polyurethanharnstoffe thermoplastisch verarbeitbar sind, d.h. die mittlere Funktionalität der Reaktanden darf nicht wesentlich von 2 (maximal ± 10%) abweichen.

Als normalerweise gegenüber Isocyanat- oder Hydroxylgruppen inert anzusehende Gleit- oder Trennmittel der Gruppe E kommen handelsübliche Produkte in Frage wie z.B. natürliche und synthetische Derivate von Fett- und Ölsäuren, langkettige Paraffine, Silicone usw. Beispielhaft seien genannt: Amide von $C_8$–$C_{20}$-Monocarbonsäuren wie Dodecylamid, Decylamid, Olelyamid oder Stearylamid in Mengen von etwa 0,1 bis 5%, bevorzugt 0,2–2%. Ebenfalls sehr gut geeignet sind Diamide aus aliphatischen Monocarbonsäuren mit mehr als 9 C-Atomen und aromatischen oder aliphatischen Diaminen, wie z.B. Phenylen-bis-palmitylamid oder Ethylen-bis-stearylamid. Als weitere Beispiele seien auch Ester von Fettsäuren, vorzugsweise mit mehr als 10 C-Atomen, wie Palmitinsäuremethyl- oder Stearinsäurebutylester sowie Glyceride von Carbonsäuren mit mehr als 8 C-Atomen genannt. Auch Polyethylenwachse und synthetische Wachse, Montanwachse, Carnaubawachs und deren Abmischungen können Verwendung finden. Als Silicone können z.B. Polydimethylsiloxane und Polydiphenylsiloxane verwendet werden.

Bevorzugt sind Mischungen aus mindestens zwei dieser Trennmittel im Gewichtsverhältnis von 9:1 bis 1:9, besonders bevorzugt Mischungen aus einem nicht funktionellen Silicon und einem Derivat von Fettsäuren mit mindestens 12 C-Atomen.

Die Herstellung der erfindungsgemäss zu verwendenden Produkte erfolgt nach bekannten Verfahren in mehrstufigen (Präpolymerverfahren) oder einstufigen (One shot) Prozessen, die beispielsweise nach dem Giessverfahren oder in selbstreinigenden zweiwelligen Schneckenmaschinen durchgeführt werden. Dabei können einzelne Reaktionsstufen wie z.B. die Präpolymerbildung ausserhalb der Schneckenmaschine, etwa in einem Kessel durchgeführt werden. Herstellverfahren dieser Art sind z.B. in der US-PS 3 233 025, 3 642 964, 3 963 679 und in der DE-B 2 610 980 und den DE-A 2 302 564 und 2 423 764 beschrieben.

Die im erfindungsgemässen Verfahren zu verwendeten Polyurethane zeichnen sich durch eine hervorragend leicht trennende (blockfreie) Oberfläche aus, ohne dass die mit einem hohen Gehalt an nicht eingebauten Trennmitteln verbundenen Nachteile wie starkes nachträgliches Ausblühen und verringerte Festigkeit auftreten. Die Kombination aus dem in das Polyurethan bzw. den Polyurethanharnstoff eingebauten Silicon und dem nicht eingebauten Trennmittel oder (-mischung) der Gruppe E ergibt bei der Extrusion oder der Blasverformung zu dünnwandigen Teilen auch im frischen Zustand überraschend leicht trennende Oberflächen, obwohl das eingebaute Silicon der Gruppe D nicht an die Produktoberfläche wandern kann.

Die erfindungsgemäss zu verwendenden Produkte können natürlich die bekannten Katalysatoren, Stabilisatoren, Verarbeitungshilfsmittel, Füllstoffe, Farbstoffe, Pigmente, andere Thermoplasten, Weichmacher usw. enthalten.

Die erfindungsgemäss zu verwendenden thermoplastischen Polyurethane werden durch Extrusion und gegebenenfalls nachfolgendes Aufblasen eines frisch extrudierten Schlauchs in einer Form (Blasformverfahren) zu Folien, Schläuchen, Kabelmänteln, Profilen, Behältern, Faltenbälgen usw. geformt, die eine gleichmässige Oberfläche haben.

Für die erfindungsgemässe Verwendung der speziellen TPU eignen sich alle in der Praxis eingesetzten, an sich bekannten Verarbeitungsmaschinen, wie sie z.B. von H. Domininghaus in «Fortschrittliche Extrudertechnik», VDI-Taschenbuch 1970, beschrieben sind. Besonderer Gegenstand der Erfindung ist die Herstellung von Blasfolien aus den speziell zusammengesetzten Polyurethanen unter Verwendung von Blasfolienanlagen als Verarbeitungsmaschinen.

Die folgenden Beispiele dienen zur Erläuterung der Erfindung. Wenn nicht anders vermerkt, sind Mengenangaben als Gewichtsteile bzw. Gewichtsprozente zu verstehen.

Beispiel 1

A) Herstellung eines im erfindungsgemässen Verfahren zu verwendenden thermoplastischen Polyurethans

57 Tle. eines Polybutandiolhexandioladipats mit einem Durchschnittsmolekulargewicht von 2000, 2,7 Tle. eines etwa trifunktionellen Diethylenglykol-Trimethylolpropan-polyadipats mit einer OH-Zahl von ca. 60 (mg KOH/g) und einer Säurezahl von 1 (mg KOH/g), 0,2 Tle. Ethylenbisstearylamid, 0,6 Tle. eines bei Raumtemperatur flüssigen, inerten Polydimethylsiloxans, 3 Tle. eines Dimethylolpolydimethylsiloxans mit einer OH-Zahl von 198 (mg KOH/g), 8,6 Tle. Butandiol-(1,4) und 0,46 Tle. Hexandiol-(1,6) werden in einer zweiwelligen Schneckenknetpresse mit gleichsinnig rotierenden Wellen bei Temperaturen bis 235 °C mit

a) 33,1 Tlen. (NCO:OH = 0,98, Produkt I),
b) 33,4 Tlen. (NCO:OH = 0,99, Produkt II),
c) 33,8 Tlen. (NCO:OH = 1,00, Produkt III),
d) 34,1 Tlen. (NCO:OH = 1,01, Produkt IV)

4,4′-Diisocyanatodiphenylmethan umgesetzt. Die aus der Schneckenmaschine austretende Schmelze wird in Wasser abgeschreckt, zerkleinert und getrocknet.

B) Herstellung einer Blasfolie nach dem erfindungsgemässen Verfahren

Das unter A beschriebene Produkt wird in einem mit drei Heizzonen, einer aus 3 Zonen gleicher Länge bestehenden Welle mit einem Durchmesser von 45 mm und einer Kompression von 1:3 und Blasfolienkopf ausgerüsteten handelsüblichen Extruder (L/D = 20) zu einer Blasfolie verarbeitet. Der Schlauch wird wie üblich mit Luft

gekühlt und nach einer Abzugsstrecke von etwa 2 m durch 2 Gummiwalzen zusammengequetscht und auf eine Rolle gewickelt (Technische Daten s. Tabelle 1).

Tabelle 1

| Zylindertemperaturen (°C) | | | |
|---|---|---|---|
| Heizzone 1 (Gehäuseanfang) | 155 | 190 | 200 |
| Heizzone 2 (Gehäuseanfang) | 160 | 195 | 205 |
| Heizzone 3 (Gehäuseanfang) | 165 | 200 | 210 |
| Düse | 160 | 190 | 195 |
| Wellendrehzahl ($min^{-1}$) | | 30 | |
| Ausstoss (kg/h) | 4,9 | 4,5 | 4,7 |
| Foliendicke (µm) | | 50 | |

Die bei den verschiedenen Extrudertemperaturen hergestellten Folien I–IV lassen sich auch nach längerer Lagerung leicht wieder von der Rolle abwickeln, und die zusammengequetschten Schlauchwände sind wieder leicht und ohne Hilfsmittel zu trennen.

Vergleichsbeispiel 2 a)

Man verfährt wie im Beispiel 1 beschrieben, verwendet jedoch ein thermoplastisches Polyurethan (V), das keines der beiden Polydimethylsiloxane, die übrigen Komponenten im gleichen Verhältnis wie die im Beispiel 1 A beschriebenen Thermoplasten enthält, wobei das molare Verhältnis der eingesetzten Isocyanatgruppen zu Hydroxylgruppen 1.00 gewählt wurde.

Polyurethan V wird wie in Beispiel 1 B beschrieben zu einer ca. 50 µm dicken Blasfolie extrudiert. Eine unter technischen Bedingungen noch trennbare Folie wird nur unter den in Tabelle 2 aufgeführten Bedingungen erhalten:

Tabelle 2

| Zylindertemperaturen (°C) | |
|---|---|
| Heizzone 1 (Gehäuseanfang) | 190 |
| Heizzone 2 (Gehäuseanfang) | 195 |
| Heizzone 3 (Gehäuseanfang) | 200 |
| Düse | 190 |
| Drehzahl ($min^{-1}$) | 30 |

Vergleichsbeispiel 2 b)

Es wird wie im Beispiel 1 A) beschrieben verfahren, jedoch wird zur Herstellung des Polyurethans VI kein Dimethylolpolydimethylsiloxan verwendet. Für die Herstellung einer Blasfolie wird ein Messextruder wie in Beispiel 3 beschrieben, eingesetzt (technische Daten siehe Tabelle 3).

Vergleichsbeispiel 2 c)

Es wird ein Polyurethan VII wie im Beispiel 1 A) beschrieben hergestellt, das jedoch weder Ethylen-bis-stearylamid noch das inerte Polydimethylsiloxan enthält. Daraus wird wie im Vergleichsbeispiel 2-A beschrieben eine Blasfolie hergestellt (technische Daten siehe Tabelle 3).

Tabelle 3

| Zylindertemperaturen (°C) | Polyurethan VI | VII |
|---|---|---|
| Heizzone 1 (Gehäuseanfang) | 170 | 174 |
| Heizzone 2 (Gehäuseanfang) | 174 | 184 |
| Heizzone 3 (Gehäuseanfang) | 184 | 200 |
| Düse | 191 | 198 |
| Wellendrehzahl ($min^{-1}$) | 30 | 30 |
| Ausstoss (g/min) | 30 | 28 |

Auch bei diesen für die Produkte VI (Vergleichsbeispiel 2 b)) und VII (Vergleichsbeispiel 2 c)) günstigsten Extrusionsbedingungen war die erhaltene Blasfolie nur schwer trennbar.

Ein Vergleich der Ergebnisse der Extrusion der Produkte I–IV und V–VII macht deutlich, dass die Kombination von in die Polyurethanketten eingebautem Polysiloxan mit nicht eingebauten Trennmitteln Folien mit wesentlich weniger blockender Oberfläche ergibt, so dass der Verarbeitungstemperaturbereich wesentlich grösser wird als mit einem normalen, dem Stand der Technik entsprechenden, nicht eingebauten Trennmittel. Ausserdem werden die Produkte I-IV genauso gleichmässig in den Verarbeitungsextruder eingezogen wie Produkt V. Produkt V, für dessen Herstellung ein anderes NCO:OH-Verhältnis als 1:1 gewählt wurde, lässt sich nicht zu einer brauchbaren Blasfolie extrudieren.

Beispiel 3

Es wird eine Blasfolie hergestellt aus einem thermoplastischen Polyurethan folgender Zusammensetzung: 95 Tle. eines Polyoxypropylenglykols mit einer OH-Zahl von 55 (mg KOH/g), 5 Tle. eines trifunktionellen Polypropylenglykols mit einer OH-Zahl von 56 (mg KOH/g), 100 Tle. eines Polyhexamethylencarbonats mit endständigen Hydroxylgruppen und einer OH-Zahl von 54 (mg KOH/g), 0,1 Tle. eines flüssigen Polydimethylsiloxans, 0,5 Tle. Ethylenbisstearylamid, 0,4 Tle. 2,6-Di-tert.-butyl-4-methylphenol, 2 Tle. Dimethylolpolydimethylsiloxan mit einer OH-Zahl von 198 (mg KOH/g), 24 Tle. Butandiol-(1,4) und 92 Tle. 4,4'-Diisocyanatodiphenylmethan. Das Produkt wird über eine Präpolymerstufe aus den Polypropylenglykolen und dem gesamten Diisocyanat erhalten. Dabei wird die zweite Reaktionsstufe wie im Beispiel 1 A beschrieben in einer zweiwelligen, gleichsinnig drehenden Schneckenmaschine durchgeführt.

Für die Herstellung der Blasfolie wird ein Messextruder mit genutetem Einzug, drei Zylinderheizzonen, kernprogressiver Welle mit einem Durchmesser von 30 mm, L/D = 20, und einem Kompressionsverhältnis von 1:3 und einem beheizbaren Blasfolienkopf verwendet. Der austretende Schlauch wird wie üblich auf einer Abzugsstrecke von etwa 1 m mit Luft gekühlt, dann durch 2 Gummiwalzen zusammengequetscht und auf eine Rolle gewickelt (Technische Daten s. Tabelle 4)

Tabelle 4

| Zylindertemperaturen (°C) | | |
|---|---|---|
| Heizzone 1 (Gehäuseanfang) | 195 | 210 |
| Heizzone 2 (Gehäuseanfang) | 187 | 205 |
| Heizzone 3 (Gehäuseanfang) | 182 | 203 |
| Düse | 182 | 200 |
| Wellendrehzahl ($min^{-1}$) | 30 | |
| Ausstoss (g/min) | 45 | |

Es wird eine leicht trennende Folie mit einer Wandstärke von etwa 50 µm erhalten.

Beispiel 4

A) Herstellung eines thermoplastischen Polyurethans auf Basis von Polyoxytetramethylenglykol.

Die Mischung aus 388 Tlen. Polyoxytetramethylenglykol vom Durchschnittsmolekulargewicht 1000 und 388 Tlen. Polyoxytetramethylenglykol vom Durchschnittsmolekulargewicht 2000 wird mit 421 Tlen. 4,4'-Diisocyanatodiphenylmethan bei 60 °C unter Feuchtigkeitsausschluss bis zur NCO-Konstanz (7,6%, 3 h) gerührt. Es werden 0,4 Tle. Ethylenbisstearylamid und 0,4 Tle des inerten, bei Raumtemperatur flüssigen Polydimethylsiloxans untergerührt. Anschliessend wird die gesamte Menge in die auf 120 °C erwärmte Mischung aus 90,5 Tlen. Butandiol-(1,4) und 38 Tlen. Dimethylolpolydimethylsiloxan (OH-Zahl 198) gegeben, kräftig durchgerührt und in eine teflonisierte Schale gegossen, die 2 h bei 120 °C, dann über Nacht bei 70 °C belassen wird. Das Produkt wird anschliessend zerkleinert.

B) Herstellung einer Blasfolie

Es wird der im Beispiel 3 beschriebene Messextruder verwendet. Zur Verarbeitung des in Beispiel 4 A beschriebenen Polyurethans zu einer Blasfolie werden folgende Bedingungen gewählt (s. Tabelle 5).

Tabelle 5

| Zylindertemperaturen (°C) | | |
|---|---|---|
| Heizzone 1 (Gehäuseanfang) | 201 | 220 |
| Heizzone 2 (Gehäuseanfang) | 196 | 216 |
| Heizzone 3 (Gehäuseanfang) | 191 | 209 |
| Düse | 187 | 205 |
| Drehzahl ($min^{-1}$) | 30 | |

Es wird eine Folie mit sehr guter Trennfähigkeit erhalten.

Beispiel 5

A) Herstellung eines thermoplastischen Polyurethanpolyharnstoffs

Ein NCO-Präpolymer aus 50 Tlen. eines Polybutandioladipats mit einem Durchschnittsmolekulargewicht von ca. 2170 (OH-Zahl 51, Säurezahl 0,6), 2,4 Tlen. Dimethylolpolydimethylsiloxan mit einer OH-Zahl von 198, 0,24 Tlen. Isopropanol, 18,2 Tlen. 1-Isocyanatomethyl-3-isocyanato-1,5,5-trimethylcyclohexan mit einem Gehalt an freien Isocyanatgruppen von 6,2%, das 0,1 Tle. Ethylenbisstearylamid enthält, wird in einer zweiwelligen Schnekkenmaschine bei Temperaturen zwischen 110 und 260 °C mit 4,4'-Diaminodicyclohexylmethan im $NCO:NH_2$-Verhältnis von 0,97 (molar) kontinuierlich umgesetzt.

B) Herstellung einer Blasfolie

In dem in Beispiel 1 B beschriebenen Einwellenextruder wird das Produkt aus Beispiel 5 A zu einer Blasfolie verarbeitet unter dem in Tabelle 6 angegebenen Bedingungen:

Tabelle 6

| Zylindertemperaturen (°C) | | |
|---|---|---|
| Heizzone 1 (Gehäuseanfang) | 170 | 190 |
| Heizzone 2 (Gehäuseanfang) | 175 | 195 |
| Heizzone 3 (Gehäuseanfang) | 200 | 220 |
| Düse | 200 | 220 |
| Drehzahl ($min^{-1}$) | 20 | |
| Ausstoss (kg/h) | 5 | |

Es wird eine Folie erhalten, die auch im frischen Zustand leicht getrennt werden kann.

Beispiel 6

In einer automatischen Blasformmaschine wird ein frisch extrudierter Schlauch von Produkt III (Beispiel 1) mit den Abmessungen von 15 × 300 mm und einer Wanddicke von ca. 4 mm als Schmelze mit 2 an den Enden fassenden Greifern, von denen einer den Schlauch abdichtet, in eine 2-teilige, wassergekühlte Form für Faltenbälge gebracht. Nach Schliessen der Form wird der Schlauch mit Pressluft aufgeblasen, wobei er sich an die äussere Form anlegt und so erkaltet (25–30 sec.). Beim Öffnen der Form fällt der Polyurethanfaltenbelag fast ohne mechanische Hilfe heraus.

Vergleichsbeispiel 7

Es wird wie in Beispiel 6 beschrieben verfahren, jedoch wird als Thermoplast Polyurethan V aus Vergleichsbeispiel 2 a) verwendet. Der frische Faltenbalg ist nur unter kräftigem Ziehen zu entformen.

**Patentansprüche**

1. Verfahren zur Herstellung von dünnwandigen Gegenständen aus thermoplastischen Polyurethanen und Polyurethanharnstoffen durch Extrusion oder Blasverformung,

dadurch gekennzeichnet, dass das thermoplastische Polyurethan bzw. der thermoplastische Polyurethanharnstoff aufgebaut ist aus

A) mindestens einer langkettigen, im wesentlichen 2 Hydroxylgruppen enthaltenden Verbindung mit Molekulargewichten zwischen 400 und 10 000, die gegebenenfalls eine höhermolekulare Verbindung mit mehr als 2 Hydroxylgruppen, deren Durchschnittsmolekulargewicht ebenfalls im angegebenen Bereich liegt, anteilig bis zu 40 Gew.-% enthalten kann,

B) einem oder mehreren aliphatischen, cycloaliphatischen, aromatischen oder araliphatischen Diisocyanaten,

C) mindestens einem mit Isocyanatgruppen reagierenden, im wesentlichen difunktionellen Kettenverlängerer mit einem Molekulargewicht von 60–300 und gegebenenfalls Wasser,

D) 0,1–15 Gewichtsprozent bezogen auf das Gesamtprodukt einer mit Isocyanatgruppen reagierenden Siliciumverbindung der allgemeinen Formel

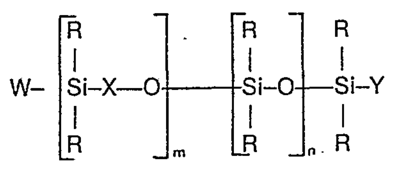

wobei

W und Y gleich oder verschieden sind und OH, COOH, $NH_2$, NHZ, SH, R'OH, R'COOH, R'$NH_2$, R'NZZ, R'NHZ, R'SH,

X einen zweiwertigen, gegebenenfalls Heteroatome enthaltenden, organischen Rest mit bis zu 6000 Molekulargewichtseinheiten,

Z einen gegebenenfalls OH, COOH, $NH_2$, NH-Alkyl, SH substituierten Alkyl-, Cycloalkyl-, Aryl- oder Aralkylrest,

R einen Alkyl-, Cycloalkyl-, Aryl und/oder Alkoxyrest mit 1–6 C-Atomen,

R' einen gegebenenfalls durch Ether-, Ester-, Thioether-, Aminogruppen unterbrochenen Alkylenrest mit bis zu 6000 Molekulargewichtseinheiten, der gegebenenfalls über Heteroatome wie z.B. Sauerstoff oder Schwefel mit dem Silicium verknüpft sein kann, bedeuten,

m und n ganze Zahlen sind, wobei m oder n = 0 sein können,

E) 0,05–5% mindestens eines normalerweise als gegenüber Isocyanat – und Hydroxylgruppen als inert anzusehenden Trennmittels,

wobei das molare Verhältnis der NCO- zu mit diesen reagierenden Gruppen der Komponenten A, C und D zwischen 0,85:1 und 1,2:1 und das molare Verhältnis von C:A zwischen 0,2:1 und 30:1 liegt.

2. Verfahren nach Anspruch 1, dadurch gekennzeichnet, dass die erfindungsgemäss zu verwendenden Polyurethane und Polyurethanharnstoffe als Komponente A) langkettige, im wesentlichen 2 Hydroxylgruppen enthaltende Verbindungen mit Molekulargewichten zwischen 450 und 6000 enthalten.

3. Verfahren nach Ansprüchen 1 und 2, dadurch gekennzeichnet, dass die langkettigen, im wesentlichen 2 Hydroxylgruppen enthaltenden Verbindungen der Komponente A bis zu 20 Gew.-% einer höhermolekularen Verbindung mit mehr als 2 Hydroxylgruppen enthalten, deren Durchschnittsmolekulargewicht in dem für die Komponente A angegebenen Bereich liegt.

4. Verfahren nach Ansprüchen 1 bis 3, dadurch gekennzeichnet, dass der Anteil der höhermolekularen Verbindung mit mehr als 2 Hydroxylgruppen in Komponente A 3–10 Gew.-% beträgt.

5. Verfahren nach Ansprüchen 1–4, dadurch gekennzeichnet, dass die erfindungsgemäss zu verwendenden Thermoplasten als Komponente C zwei Kettenverlängerer im Gewichtsverhältnis 98:2 bis 60:40 enthalten.

6. Verfahren nach Ansprüchen 1–5, dadurch gekennzeichnet, dass die erfindungsgemäss zu verwendenden Thermoplasten als Komponente C Mischungen aus Butandiol oder Hexandiol und mindestens einem anderen Glykol und/oder einem aliphatischen und/oder cycloaliphatischen Diamin enthalten.

7. Verfahren nach Ansprüchen 1–6, dadurch gekennzeichnet, dass das erfindungsgemäss zu verwendende Produkt als mit Isocyanat reagierende Siliciumverbindung ein Dimethylolpolydimethylsiloxan oder ein Di-aminoalkylpolydimethylsiloxan enthält.

8. Verfahren nach Ansprüchen 1–7, dadurch gekennzeichnet, dass für die Herstellung der erfindungsgemäss zu verwendenden Thermoplasten ein Verhältnis von Isocyanatgruppen zu mit diesen reagierenden Gruppen der Komponenten A, C und D zwischen 0,93:1 bis 1,1:1 gewählt wird.

9. Verfahren nach Ansprüchen 1–8, dadurch gekennzeichnet, dass die erfindungsgemäss zu verwendenden Polyurethan- und Polyurethanharnstoffthermoplasten als normalerweise gegenüber Isocyanat- und Hydroxylgruppen als inert anzusehendes Trennmittel (Komponente E) eine Mischung aus einem Siliconöl und einem weiteren Trennmittel im Gewichtsverhältnis 9:1 bis 1:9 enthalten.

**Claims**

1. Process for the production of thin-walled articles of thermoplastic polyurethanes and polyurethane ureas by extrusion or blow moulding, characterised in that the thermoplastic polyurethane or the thermoplastic polyurethane urea is synthesised from

A) at least one long-chain compound which contains substantially 2 hydroxyl groups and has molecular weights between 400 and 10 000 and can optionally contain a relatively high molecular weight compound containing more than 2 hydroxyl groups of which the average molecular weight is also within the indicated range, in a proportion of up to 40% by weight,

B) one or more aliphatic, cycloaliphatic, aromatic or araliphatic diisocyanates,

C) at least one substantially difunctional chain-lengthening agent which reacts with isocyanate groups and has a molecular weight of 60–300 and optionally water,

D) 0.1–15 per cent by weight, based on the total product, of a silicon compound, which reacts with isocyanate groups, of the general formula

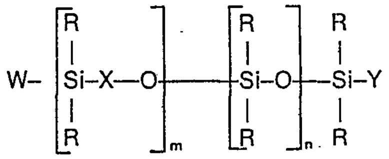

wherein

W and Y are identical or different and denote OH, COOH, $NH_2$, NHZ, SH, R′OH, R′COOH, $R'NH_2$, R′ NZZ, R′NHZ or R′SH, X denotes a divalent organic radical which has up to 6000 molecular weight units and optionally contains hetero atoms,

Z denotes an optionally OH-, COOH-, $NH_2$-, NH-alkyl-, or SH-substituted alkyl, cycloalkyl, aryl or aralkyl radical,

R denotes an alkyl, cycloalkyl, aryl and/or alkoxy radical with 1–6 C atoms,

R′ denotes an alkylene radical which has up to 6000 molecular weight units, is optionally interrupted by ether, ester, thioether or amino groups and can optionally be linked to the silicon via hetero atoms such as, for example, oxygen or sulphur,

m and n are integers, it being possible for m or n to be 0 and

E) 0.05–5% of at least one release agent which is normally to be regarded as inert towards isocyanate and hydroxyl groups, the molar ratio of the NCO groups to groups in components A, C and D which react with these NCO groups being between 0.85:1 and 1.2:1 and the molar ratio of C:A being between 0.2:1 and 30:1.

2. Process according to Claim 1, characterised in that the polyurethanes and polyurethane ureas to be used according to the invention contain, as component A), long-chain compounds containing substantially 2 hydroxyl groups and having molecular weights between 450 and 6000.

3. Process according to Claims 1 and 2, characterised in that the long-chain compounds of component A containing substantially 2 hydroxyl groups contain up to 20% by weight of a relatively high molecular weight compound with more than 2 hydroxyl groups of which the average molecular weight is in the range mentioned for component A.

4. Process according to Claims 1 to 3, characterised in that the proportion of the relatively high molecular weight compound containing more than 2 hydroxyl groups in component A is 3–10% by weight.

5. Process according to Claim 1–4, characterised in that the thermoplasts to be used according to the invention contain as component C two chain-lengthening agents in a weight ratio of 98:2 to 60:40.

6. Process according to Claims 1–5, characterised in that the thermoplasts to be used according to the invention contain as component C mixtures of butanediol or hexanediol and at least one other glycol and/or an aliphatic and/or cycloaliphatic diamine.

7. Process according to Claims 1–6, characterised in that the product to be used according to the invention contains as the silicon compound reacting with isocyanate a dimethylol polydimethylsiloxane or a di-aminoalkyl polydimethylsiloxane.

8. Process according to Claims 1–7, characterised in that a ratio of isocyanate groups to groups in components A, C and D which react with these isocyanate groups of between 0.93:1 and 1.1:1 is selected for the production of the thermoplasts to be used according to the invention.

9. Process according to Claims 1–8, characterised in that the polyurethane and polyurethane urea thermoplasts to be used according to the invention contain, as the release agent (component E) which is normally to be regarded as inert towards isocyanate and hydroxyl groups, a mixture of a silicone oil and another release agent in a weight ratio of 9:1 to 1:9.

## Revendications

1. Procédé de fabrication d'objets à parois minces en des polyuréthanes et polyuréthane-urées thermoplastiques par extrusion ou formage-soufflage, caractérisé en ce que le polyuréthane thermoplastique ou la polyuréthane-urée thermoplastique est constitué à partir

A) d'au moins un composé à longue chaîne contenant essentiellement 2 groupes hydroxyle et possédant des poids moléculaires entre 400 et 10 000, qui le cas échéant peut en partie contenir jusqu'à 40% en poids d'un composé à poids moléculaire élevé ayant plus de 2 groupes hydroxyle et dont le poids moléculaire moyen se situe de même dans l'intervalle indiqué,

B) d'un ou de plusieurs diisocyanates aliphatiques, cycloaliphatiques, aromatiques ou araliphatiques,

C) d'au moins un agent d'allongement de chaîne essentiellement difonctionnel réagissant avec les groupes isocyanate et ayant un poids moléculaire de 60 à 300, éventuellement de l'eau,

D)de 0,1 à 15% en poids par rapport au produit total d'un composé de silicium réagissant avec les groupes isocyanate, de formule générale:

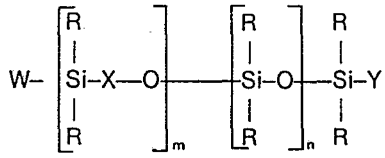

dans laquelle

W et Y sont identiques ou différentes et signifient OH, COOH, $NH_2$, NHZ, SH, R'OH, R'COOH, $R'NH_2$, R'NZZ, R'NHZ, R'SH,

X un radical organique bivalent contenant éventuellement des hétéroatomes et ayant jusqu'à 6000 unités de poids moléculaire,

Z un radical alcoyle, cycloalcoyle, aryle ou aralcoyle éventuellement substitué par OH, COOH, $NH_2$, NH-alcoyle, SH,

R un radical alcoyle, cycloalcoyle, aryle et/ou alcoxy ayant 1 à 6 atomes de carbone,

R' un radical alcoylène éventuellement interrompu par des groupes éther, ester, thioéther, amino et ayant jusqu'à 6000 unités de poids moléculaire, qui peut éventuellement être relié par des hétéroatomes comme par exemple de l'oxygène ou du soufre avec le silicium,

m et n sont des nombres entiers, m ou n pouvant être zéro,

E) de 0,05 à 5% en poids d'au moins un agent séparateur normalement considéré comme inerte envers les groupes isocyanate et hydroxyle,

le rapport molaire des groupes NCO envers les groupes réagissant avec eux des composants A, C et D se situant entre 0,85:1 et 1,2:1 et le rapport molaire C:A entre 0,2:1 et 30:1.

2. Procédé selon la revendication 1, caractérisé en ce que les polyuréthanes et polyuréthane-urées à utiliser selon l'invention contiennent comme composant A) des composés à longue chaîne contenant essentiellement 2 groupes hydroxyle et ayant des poids moléculaires entre 450 et 6000.

3. Procédé selon les revendications 1 et 2, caractérisé en ce que les composés à longue chaîne contenant essentiellement 2 groupes hydroxyle du composant A contiennent jusqu'à 20% en poids d'un composé à poids moléculaire élevé ayant plus de 2 groupes hydroxyle et dont le poids moléculaire moyen se situe dans l'intervalle indiqué pour le composant A.

4. Procédé selon les revendications 1 à 3, caractérisé en ce que la proportion du composé à poids moléculaire élevé ayant plus de 2 groupes hydroxyle dans le composant A s'élève à 3–10% en poids.

5. Procédé selon les revendications 1 à 4, caractérisé en ce que les thermoplastes à employer conformément à l'invention contiennent comme composant C deux agents d'allongement de chaîne dans le rapport pondéral de 98:2 à 60:40.

6. Procédé selon les revendications 1 à 5, caractérisé en ce que les thermoplastes à employer conformément à l'invention contiennent comme composant C des mélanges de butane diol ou d'hexane diol et d'au moins un autre glycol et/ou d'une diamine aliphatique et/ou cycloaliphatique.

7. Procédé selon les revendications 1 à 6, caractérisé en ce que le produit à employer conformément à l'invention contient comme composé de silicium réagissant avec l'isocyanate un diméthylolpolydiméthylsiloxane ou un di-amino-alcoylpolydiméthylsiloxane.

8. Procédé selon les revendications 1 à 7, caractérisé en ce que pour la fabrication des thermoplastes à employer conformément à l'invention on choisit un rapport des groupes isocyanate envers les groupes réagissant avec eux des composants A, C et D entre 0,93:1 et 1,1:1.

9. Procédé selon les revendications 1 à 8, caractérisé en ce que les thermoplastes de polyuréthane et de polyuréthane-urée à employer conformément à l'invention contiennent comme agent séparateur (composant E), considéré normalement comme inerte envers les groupes isocyanate et hydroxyle, un mélange d'une huile de silicone et d'un autre agent séparateur dans le rapport pondéral de 9:1 à 1:9.